Europäisches Patentamt

European Patent Office

Office européen des brevets

(19)

(11) EP 0 446 903 B1

(12) EUROPEAN PATENT SPECIFICATION

(45) Date of publication and mention
of the grant of the patent:
**26.06.1996 Bulletin 1996/26**

(51) Int Cl.6: **G05D 1/02**

(21) Application number: **91103853.7**

(22) Date of filing: **13.03.1991**

(54) **Automatic travelling apparatus**

Gerät zum automatischen Fahren

Appareil mobile automatique

(84) Designated Contracting States:
**DE FR GB**

(30) Priority: **15.03.1990 JP 64587/90**

(43) Date of publication of application:
**18.09.1991 Bulletin 1991/38**

(73) Proprietor: **HONDA GIKEN KOGYO KABUSHIKI KAISHA**
**Minato-ku, Tokyo (JP)**

(72) Inventors:
• **Ishida, Shinnosuke, c/o K.K. Honda**
**Wako-shi, Saitama (JP)**

• **Takei, Akihiko, c/o K.K. Honda**
**Wako-shi, Saitama (JP)**

(74) Representative:
**Prechtel, Jörg, Dipl.-Phys. Dr. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**81635 München (DE)**

(56) References cited:
EP-A- 0 268 509          EP-A- 0 354 561
DE-A- 3 541 969          DE-A- 3 626 208
DE-A- 3 820 589          US-A- 4 994 971

## Description

The present invention relates to an automatic travelling apparatus according to the preamble part of claim 1. An apparatus like this is known e.g. from EP-A-0 354 561.

On taking a curve the actual running direction of a vehicle equipped with the automatic travelling apparatus may deviate from the direcnion associated with the body of the vehicle. An appropriate measure for this deviation is the so-called side-slip angle, i.e. the angle between the actual running direction and the longitudinal vehicle axis. This side-slip angle, designated by $\beta$, depends on running speed, weight, steering angle and other parameters of the vehicle.

Since the image pick-up device takes an image of the area ahead of the vehicle with the vehicle as reference base, the monitoring direction of the image pick-up device will deviate from the actual running direction of the vehicle, if the side-slip angle in not equal to 0. Accordingly, while the vehicle runs with a side-slip angle, the image pick-up device cannot monitor the actual course of the vehicle. If in this situation the steering amount is estimated in relation to a target course set in a permissible travelling area, it may contain an error corresponding to the side-slip angle of the vehicle, thus decreasing the accuracy with which the target course is followed.

In other words, while the vehicle runs with a side-slip angle, the image pick-up device can not monitor the actual course of the vehicle, that is, the Y-axis of the X-Y coordinates does not stand for the actual running direction. If in said situation a steering amount is estimated in respect to a target course set in a permissible travelling area determined in the X-Y coordinates, it may contain an error corresponding to the side-slip angle of the vehicle, thereby decreasing an accuracy of following the target course.

From the DE-A-38 20 584 a method for determining a posture ancle of a vehicle with respect to the center line of the road and the road curvature is known. This document further discloses an automatic travelling apparatus where the steering amount is estimated under consideration of the vehicle velocity , the posture angle of the vehicle, the curvature of the road, the width of the road and the distance of the vehicle from the edge of the road.

The side-slip ange is not taken into consideration for determining the steering amount. This document further fails to even mention the problem that the actual running direction of the vehicle might deviate from the direccion of the vehicle body. Accordingly, there is no quantity to be associated to the side-slip angle.

Also the DE 35 41 969 A1 discloses a method for determining a posture angle of a vehicle, but does not contain any references to a side-slip angle or the like.

In view of the foregoing it is an object of the present invention to provide an automatic travelling apparatus according to the preamble part of claim 1 which is capable of steering the vehicle with a higher degree of accuracy to permit accurate following of the traget course by the vehicle even when taking a curve.

This object is achieved by the automatic travelling apparatus defined in the new claim 1. According to the invention the steering amount is estimated under consideration of the side-slip angle. This means, e.g., if the vehicle follows a target course including a right-hand curve the actual running direction might deviate from the longitudinal axis of the vehicle to the left side with a side-slip angle $\beta$, which angle increases with the vehicle speed. To follow the target course a tire steering angle to the right, which might be appropriate for the case that the side-slip angel is equal to 0, would be to small for an case $\beta = \beta_1 > 0$, and a tire steering angle appropriate for the case $\beta = \beta_1$ would be to small for an case $\beta = \beta_2 > \beta_1$, where the side-slip ange is further increased. Accordingly, for the example discussed above the tire steering angle has to be increased with the side-slip angle. As stated in claim 1, this is done by turning the image taken by the image pick-up device on the basis of the detected side-slip angle or by turning the determined permissible travelling area on the basis of the detected side-slip angle or by turning the target course on the basis of the detect side-slip angle. Accordingly, the tire steering angle is always set appropriately with respect to the target course and the side-slip angle by steering the vehicle appropriately.

BRIEF DESCRIPTION OF DRAWINGS

Fig. 1 is a block diagram showing a structure of an automatic travelling apparatus embodying the present invention.
Fig. 2 shows a line segment of a road obtained by processing data of an image taken by a video camera.
Fig. 3 shows an image obtained by projective transformation of the image shown in Fig. 2.
Fig. 4 shows an example of a target course set in a permissible area within a road width.
Figs. 5 (a) and 5 (b) show target courses set on a road which a vehicle is to travel at a low speed (a) and a high speed (b) respectively.
Fig. 6 shows a relationship between a target course and a presumed course.
Fig. 7 shows a relationship between a vehicle's steering angle and its turning radius.
Fig. 8 shows a line segment in the X-Y coordinates.
Fig. 9 shows a point on the $\rho$-$\Theta$ point coordinates obtained by the Hough conversion of the line segment shown in Fig. 8.
Figs. 10 (a) and (b) show how a vehicle makes steady turns at high (a) and low (b) running speeds respectively.

Figs. 11 (a) and (b) show image conditions when a vehicle makes steady turns at high (a) and low (b) running speeds respectively.

Fig. 12 shows an image turned by a side-slip angle of a vehicle.

Fig. 13 shows an example of a flow of control according to the present invention.

In the drawings, 1 is an image pick-up device, 2 an image processor, 3 a means for determining a permissible travelling area, 4 a means for setting a target course, 5 a control means, 6 a running speed sensor, 7 a Yaw rate sensor, 8 a steering angle sensor, 9 a steering controller, 10 a steering drive, 11 a vehicle.

## DESCRIPTION OF THE PREFERRED EMBODIMENTS

Referring now to the drawings, a preferred embodiment will be described in detail.

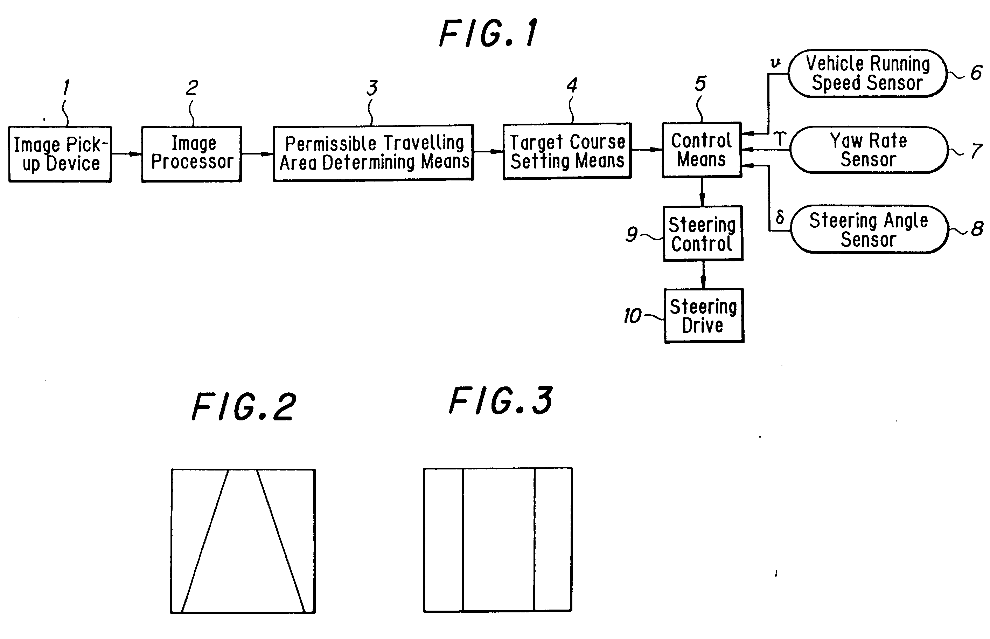

In Fig. 1, an automatic travelling apparatus according to the present invention comprises: an image pick-up device 1 such as a video camera attached to a vehicle for continuously picking up subsequent images of ground ahead of the vehicle; means 2 for processing the images taken by the image pick-up device 1 to extract therefrom segments of continuous lines such as road edges and the like; means 3 for determining, on the basis of the obtained continuous line segments, a permissible travelling area such as a road in the direction in which the vehicle is to travel; means 4 for setting a target course in the permissible travelling area thus determined; means 5 for determining the instantaneous running condition of the vehicle on the basis of an output signal from a speed sensor 6 representing the vehicle's running speed "v", an output signal from a yaw rate sensor 7 representing the yaw rate $\Upsilon$ and an output signal from a steering angle sensor 8 representing the tire angle "$\delta$" which varies with the steering of the vehicle, and for estimating, on the basis of the instantaneous running condition, a steering amount for permitting the vehicle to follow the target course; and means 9 (and a steeing drive 10) for steering the vehicle with reference to the steering amount.

Actually, a microcomputer aided control is used in place of means 2, 3, 4 and 5, and means 9 can be included in the microcomputer aided control, if occasions demand.

The extraction of continuous line segments such as road edges from the taken image in the image processing means 2 can be made as follows:

First, each image supplied from the image pick-up device 1 is subjected to differentiation process for detection of the road edges. Then, an automatic threshold setting circuit in the image processing means 2 sets an optimum threshold value in consideration of the degree of shade of the road edge image information just processed. The road edge image will be subjected to binary transformation.

Alternately, first, the images may be subjected to binary transformation, and then the binary data may be subjected to differentiation. In place of binary transformation poly-digitization may be performed to express some shade details of image.

Digitalized image information will be subjected to the well known Hough conversion to convert the X-Y linear coordinates to the corresponding $\rho$-$\theta$ point coordinates, thus eliminating isolated points and plotting to provide a continuous line segments of the road edges as shown in Fig. 2.

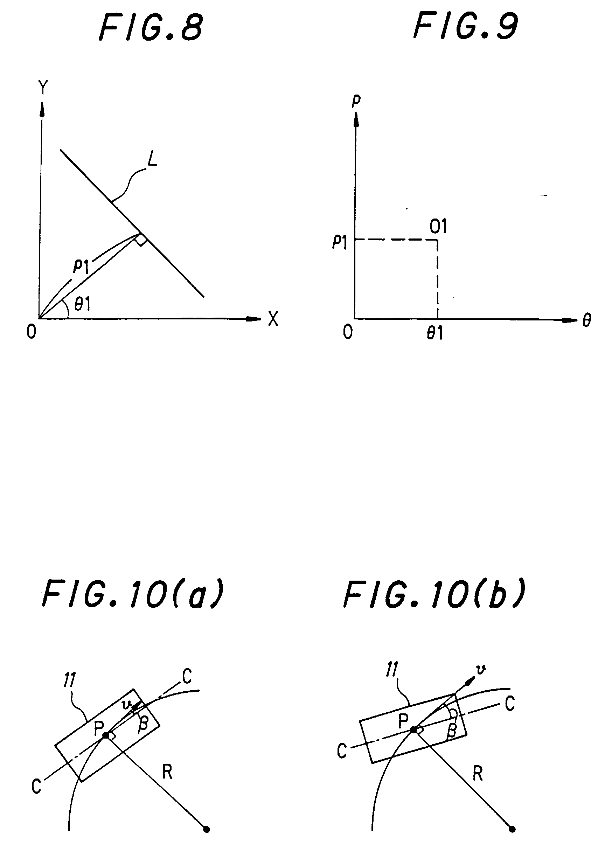

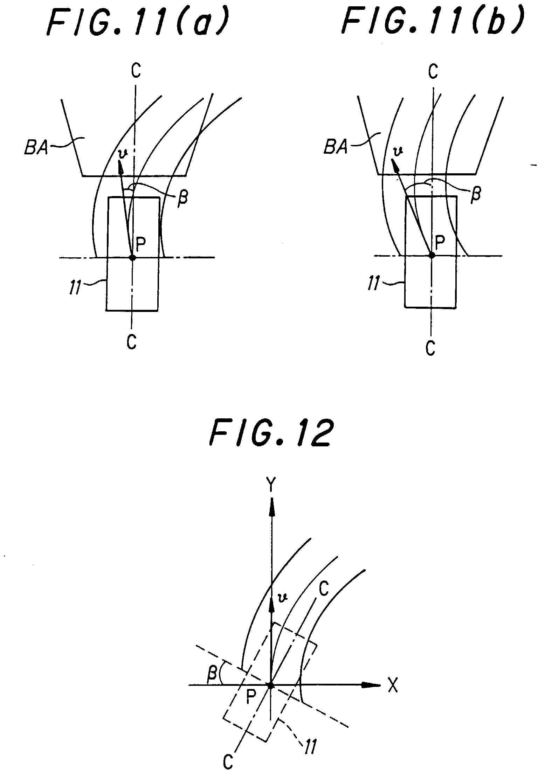

$\theta$ stands for an angle formed between the X-axis and a perpendicular from the origin of the X-Y coordinates to a line segment, whereas $p$ stands for the length of the normal line. For instance, the line L in the X-Y coordinates in Fig. 10 is expressed as the point 01 in the $\rho$-$\theta$ point coordinates in Fig. 11.

On that occasion, edge tracing may be performed on the basis of binary-coded image information to obtain a continuous road edge. The Hough conversion, edge tracing and other appropriate processings may be performed simultaneously, and then synthetic judgement may be made on the results of these processings to obtain a precise road edge information. More accurate road edge information may be taken out when the above-mentioned image processings are made with developing an input image area as the vehicle travels.

The image taken by a video camera represents a perspective view. The perspective road edge image as shown in Fig. 2 can be converted to non-perspective road edge image as shown in Fig. 3 according to the known projective conversion process.

The permissible travelling area determining means 3 has a projective conversion characteristics set in consideration of the perspective characteristics of associated video cameras.

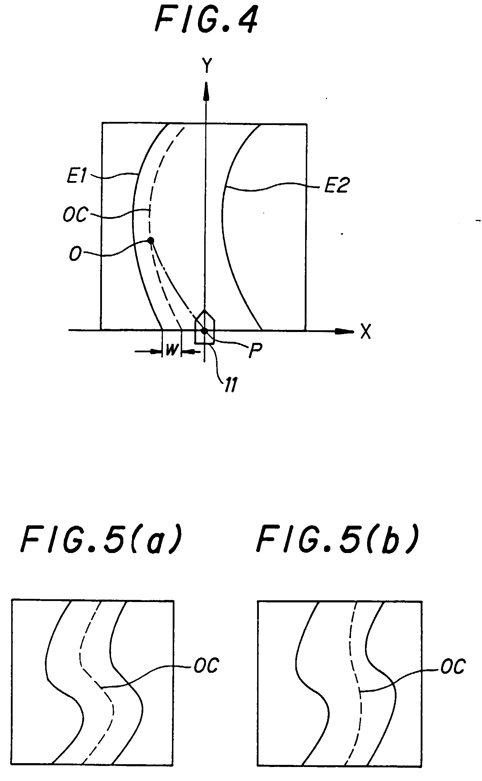

The permissible travelling area determining means 3 can determine, on the basis of the non-perspective road image obtained by projective conversion, for instance, an area between the continuous road edges E1 and E2 shown in Fig. 4 as a permissible travelling area RA in the X-Y coordinates wherein the Y-axis corresponds to the direction in which the image is pictured by the image pick-up device 1, i.e., the vehicle travels.

In Fig. 4, a current or instantaneous position of the vehicle 11 is indicated at a point P, and the video camera of the image pick-up device 1 is mounted at a predetermined position on the vehicle whereat the point P may appear at the center lower point of the display screen as the origin of the X-Y coordinates.

After a permissible travelling area is determined by the permissible travelling area determining means 3, the target course setting means 4 will select a course most appropriate for running in the permissible travelling area, and will set the so selected course as a target course to follow.

Preferably, the course may be determined in consideration of the road contour and the running speed of the vehicle to meet the instantaneous travelling condition of the vehicle. However, the course may be basically determined in the width of the road as follows:

In case that the target course setting means 4 finds that the width of the road is above a predetermined extent, and that vehicle must keep to the left, a target course OC will be set a given constant distance "w" (for instance, 1.5 meters) apart from the left edge of the road, as shown in Fig. 4.

In case that the width of the road is below the predetermined extent, a target course will be set along the center line (not shown) of the road.

The coordinates of the target course are stored in the memories of the target course setting means 4 and are successively renewed as the vehicle is running. The divisions of the X-Y coordinates for the permissible travelling area and the target course are selected in compliance with the magnification of the video camera of the image pick-up device 1.

In Fig. 4, the trace of the vehicle from "P" to "0" represents the course actually followed by the vehicle under the control of the control means 5 until the vehicle has come to the target course OC at the point 0.

According to the present invention, it is also-possible to set a target course in consideration of the running condition of the vehicle as follows:

In case that the target course setting means 4 finds that the running speed measured by the speed sensor 6 is below a predetermined speed, the target course OC will be set in conformity with the road contour as seen from Fig. 4.

When the running speed of the vehicle is higher than a predetermined speed, and when the vehicle is running a curved road as shown in Fig. 5(b), a target course OC of reduced curvature is set so as to reduce the lateral force which is applied to the vehicle.

After setting a target course in the road, the control means 5 will estimate a steering amount to permit the vehicle to follow the target course as follows:

When the steering amount relates to a steering angle of the vehicle, the control means 5 presumes a course which the vehicle will run along on the basis of the currently detected running condition; calculates a deviation of the presumed running course from the target course; determines an amount of steering angle to be corrected for bringing the vehicle to follow the target course; and then makes the steering control of the vehicle according to the steering amount, i.e., the steering angle for correction.

In practice, for example, the position whereto the vehicle will attain is presumed as a point on the X-Y coordinates having the Y-axis representing the running direction of the vehicle and the lateral deviation of the presumed point from the point of target position is measured to finally determine therefrom a corresponding amount of steering angle to be corrected.

Now it is assumed that a vehicle 11 at Point "P" shall be steered to get on the target course OC.

First, the distance L (m) (L= v x T) on the Y-axis which the vehicle can run in T seconds will be determined on the basis of the vehicle's running speed v (m/s) which is determined by the speed sensor. Then, the lateral deviation $x\ell$ from Point "C" (on which the vehicle would be in T seconds if it travelled straight along the Y-axis by the distance L) to the target course OC will be estimated.

Second, the course AC which the vehicle is supposed to follow will be estimated from the yaw rate $\gamma$ (rad/sec), and then the lateral deviation xm from Point "C" to the presumed course AC will be estimated by the following equation:

$$xm = R - \{R^2 - (v \times tm)^2\}^{1/2}$$

$$= R - R\{1 - (v \times tm/R)^2\}^{1/2}$$

where R stands for a radius of the presumed course AC.

When R >> v X tm, we obtain

$$xm \doteqdot R - R\{1 - (v \times tm/R)^2 /2\}$$

$$= v^2 \times tm^2 /2R$$

$$= L^2 /2R \qquad\qquad (1)$$

$$\gamma = v / R \qquad\qquad (2)$$

From Equations (1) and (2)

$$xm = L^2 \, \Upsilon \, / \, 2v \qquad (3)$$

The positive sign of yaw rate $\Upsilon$ represents that the presumed course AC turns to the left whereas the negative sign indicates the presumed course AC turning to the right.

The yaw rate $\Delta\Gamma$ to which the yaw rate of the vehicle is to be corrected will be determined from the following equation:

$$\Delta\Upsilon = e \times 2v \, / \, L^2 \qquad (4)$$

Then, on the basis of the tire angle $\delta$ detected at Point "P" by the steering angle sensor 8, the steering amount $\delta'$ for permitting the vehicle to get on the target course OC can be determined as follows:

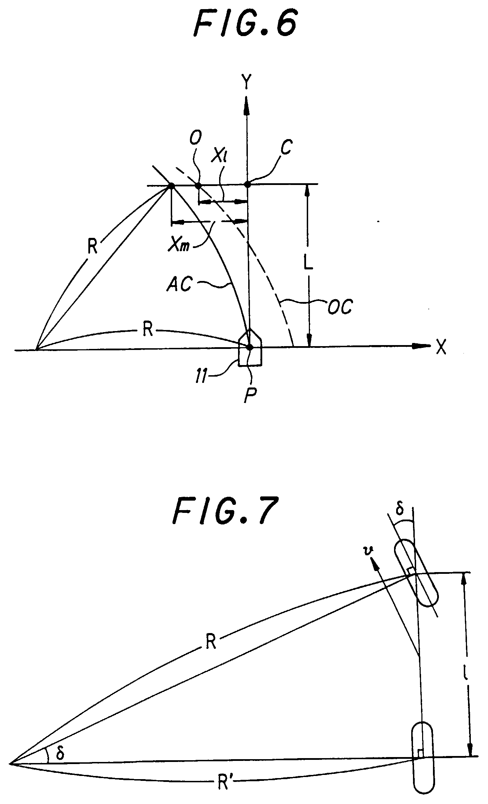

Referring to Fig. 7, when $R >> \ell$, the following equation can be obtained:

$$\delta = \ell \, / \, R \qquad (5)$$

From equations (2) and (5) we can derive

$$\delta = ( \, \ell / v \, ) \, \Upsilon \qquad (6)$$

where $\ell$ stands for wheel base. According to the equation (6) the tire angle $\Delta\delta$ for correction in accordance with the yaw rate $\Delta\Gamma$ to be corrected can be given by the following equation:

$$\Delta\delta = ( \, \ell \, / \, v \, ) \, \Delta\Upsilon \qquad (7)$$

In consideration of an usual equation of steering angle in relation to the running speed, i.e., substituting $\ell = (1+Kv^2)$ into the equation (7), we can obtain

$$\Delta\delta = \Delta\Upsilon \, \{ \, e \, (1 + Kv^2) \, / \, v \, ) \qquad (8)$$

where "K" is a constant which is determined both from the tyre characteristics and the vehicle characteristics.

Therefore, a steering amount $\delta'$ for permitting the vehicle to get on the target course can be obtained by the following equation:

$$\delta' = \delta + \Delta\delta \qquad (9)$$

In response to the steering amount $\delta'$ given from the control means 5 the steering control means 9 issues a drive command to the steering drive 10 which in turn steers the vehicle toward the target course OC.

The above-mentioned processing operations will be repeated at specified intervals of several milliseconds, thereby the steering control of the vehicle may be continuously performed to permit the vehicle to automatically follow the target course OC.

The above-mentioned automatic travelling apparatus as afore mentioned has such a problem that while vehicle running a curve, its body may deviate from the actual running direction due to the affection of a side-slip angle and thereby the monitoring direction of the image pick-up device attached to the vehicle for taking an image of the ground ahead of the vehicle also deviates from the actual running direction of the vehicle.

As shown in Figs. 10 (a) and (b), while making a steady circular turn, a vehicle 11 may have a difference between its body direction and running direction (indicated by vector "v"), which corresponds to a side-slip angle "β" which in value depends upon the vehicle's running speed. Fig. 10 (a) shows the state of the vehicle turning at a lower speed, and Fig. 10 (b) shows the state of the vehicle turning at a higher speed. The higher the vehicle's running speed "v" is, the larger its side-slip angle "β"is.

In this case, an image taken by a video camera (image pick-up device 1) which is attached to the vehicle 11 in such a way so as to take a picture of an area ahead of the vehicle 11 in the direction along a center line c - c may turn around the same circle but monitor a front area having a deflection of its axis from the center line c - c by a side-slip angle "β", value of which may differs depending upon the vehicle's running speed as shown in Fig. 11 (a) and (b) wherein "BA" denotes a front area image taken by each video camera.

Consequently, if the apparatus determines a permissible travelling area on the basis of an image taken by the video camera when the vehicle having a side-slip angle β, sets therein a target course and estimates a steering amount for permitting the vehicle to follow the target course, the steering amount may includes in itself an error corresponding to the side-slip angle which the vehicle had.

In order to eliminate the above-mentioned problem, the automatic travelling apparatus according to the present invention includes means for determining a side-slip angle β of the vehicle and means for converting an image taken during the vehicle having a side-slip angle into a front area image viewed in the running direction.

These means will work in the image processing means 2.

Means for converting an image into that viewed in the running direction according to the side-slip angle of the vehicle may practically turn the taken image by the determined side-slip angle β about a center point P in such way so as to bring the actual running direction (represented by a vector "v") into coincidence with the Y-axis of the X-Y coordinates. The image turning is computed according to a specified operational expression on the basis of the image data.

The automatic travelling apparatus according to the present invention can determine a permissible travelling area on the X-Y coordinates on the basis of the image thus corrected for the side-slip angle of the vehicle, set a target course in the permissible travelling area and estimate a steering amount for following the target course, thereby permitting the vehicle to keep the target course with no affection of the vehicle's side-slip angle β.

Besides the above-mentioned image turning process in the image processing means 2, it is also possible to eliminate an error due to a side-slip angle β of the vehicle by such a way that a permissible travelling area, e.g. an area between a road edges in the X-Y coordinates, which is determined on the basis of the image not subjected to turning process in the image processing means 2, is turned by the side-slip angle β in the means 3 for determining a permissible travelling area.

In this case the steering control may be conducted with no affection of the side-slip angle β if a target course is set in the permissible travelling area pattern thus turned for correction and a steering amount is estimated in relation to said target course.

Besides the above-mentioned two turning processes, it is also possible to eliminate an error due to a side-slip angle β of the vehicle by such a way that a target course set in the permissible travelling area not subjected to the turning process is turned by the side-slip angle β in the target course setting means 4.

In this case the steering control may be conducted with no affection of the side-slip angle β if a steering amount is estimated in relation to the target course pattern thus tuned for due correction.

A side-slip angle β of a vehicle is given by the following formula:

$$\beta = (I \cdot Cf \cdot S/v + Cf \cdot Cr \cdot \ell \cdot b/v^2 - M \cdot Cf \cdot a) \times \delta/\Delta o \ (S) \tag{10}$$

$$\Delta o(S) = I \cdot M \cdot S^2 + \{(Cf \cdot a^2 + Cr \cdot b^2)M + (Cf + Cr)I\}$$

$$(S/V) + Cf \cdot Cr \cdot \ell^2 \ (1 + Kv^2)/v^2 \tag{11}$$

$$K = (Cr \cdot b - Cf \cdot a) \ M/Cf \cdot Cr \cdot \ell^2 \tag{12}$$

where I is a moment of inertia of a vehicle, v is a running speed of a vehicle, M is a vehicle's weight, Cf, Cr are cornering powers of front and rear tyres respectively, a, b are distances from the vehicle gravity center to front and rear tyres respectively, ℓ is a wheelbase, δ is a steering angle, S is a Laplace operator.

Values of side-slip angle "β" of a vehicle at different values of vehicle's running speed "v" and of steering angle "δ" may be previously estimated and stored in a memory table, and when a running speed "v" and a steering angle "δ" are detected by a running speed sensor and a steering angle sensor respectively, a corresponding value of side-slip angle "β" is read out from the memory table.

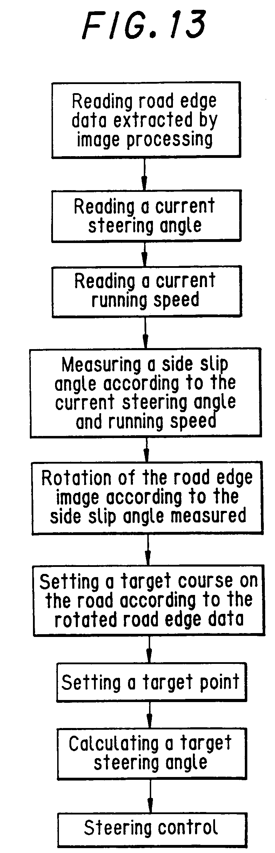

Fig. 13 shows an example of control flow according to the present invention.

As be apparent from the foregoing description, the automatic travelling apparatus according to the present invention offers such an advantage that when conducting a control cycle including: taking an image of an area ahead of a vehicle in its running direction by an image pick-up device fixed to the vehicle; determining, by processing the taken image, a permissible travelling area in a X-Y coordinates having the Y-axis corresponding to the axis of the vehicle's running direction; setting a target course in the determined permissible travelling area; estimating a steering amount necessary for permitting the vehicle to follow the target course on the basis of the detected running condition of the vehicle; and steering the vehicle to follow the target course with reference to the steering amount; it is capable of determining a side-slip angle of the vehicle and rotating the image or the permissible travelling area or the target course by the determined side-slip angle to bring the actual running direction of the vehicle into coincidence with the direction of the Y-axis, thereby permitting the vehicle to accurately follow the target course with no affection of the side-slip angle.

The invention as described above can be summarized as follows:

Disclosed is an automatic travelling apparatus which is capable of taking an image of an area ahead of a vehicle in its running direction by an image pick-up device fixed to the vehicle; determining, by processing the taken image, a permissible travelling area in a X-Y coordinates having the Y-axis corresponding to the axis of the vehicle's running direction; setting a target course in the determined permissible travelling area; estimating a steering amount necessary for permitting the vehicle to follow the target course on the basis of the detected running condition of the vehicle; and steering the vehicle to follow the target course with reference to the steering amount; and also is capable of determining a side-slip angle of the vehicle and turning any one of patterns - image, permissible travelling area and the target course - by the determined side-slip angle to coincide the actual running direction of the vehicle with the direction of the Y-axis.

## Claims

1. Automatic travelling apparatus comprising:

   an image pick-up device (1) attached to a vehicle (11) for taking an area image ahead of the running vehicle (11);
   means (3) for determining a permissible travelling area (RA) in X-Y coordinates having an Y-axis corresponding to the vehicle running direction by processing an image taken by the image pick-up device;
   means (4) for setting a target course (OC) in the permissible travelling area (RA) thus determined;
   means (6, 7, 8) for detecting the instantaneous running condition (v, $\gamma$, $\delta$) of of the vehicle;
   means (5) for estimating, on the basis of the instananeous running condition (v, $\gamma$, $\delta$), a steering amount ($\delta'$) to permit the vehicle (11) to follow the target course (OC); and
   means (9, 10) for steering the vehicle (11) with reference to the steering amount ($\delta'$),

   characterized in that means (5) for determining a side-slip angle ($\beta$) of the vehicle and means (2; 3; 4) for turning one of area image (BA), permissible travelling area (RA) and target course (OC) on the basis of the detected side-slip angle ($\beta$) so as to match an actual running direction ($\vartheta$) with the Y-axis are provided.

2. Automatic travelling apparatus according to claim 1, characcerfzed in that the means (2) for turning the image (BA) taken by the image pick-up device (1) are provided for determination of the permissible travelling area (RA) in relation to the image (BA) subjected to the turning process.

3. Automatic travelling apparatus according to claim 1, characterized in that the means (3) for turning the determined permissible travelling area (RA) are provided for setting the target course (OC) in the permissible travelling area (RA) subjected to the turning process.

4. Automatic travelling apparatus according to claim 1, characterized in that the means (4) for turning the target course (OC) are provided for determining the steering amount ($\delta'$) relative to the target course (OC) subjected to the turning process.

5. Automatic travelling apparatus according to one of the preceding claims wherein the instantaneous running condition of the vehicle (11) is determined in terms of running speed (v), yaw rate ($\gamma$) and tire steering angle ($\delta$).

## Patentansprüche

1. Automatische Fahrvorrichtung, umfassend:

   eine an einem Fahrzeug (11) angebrachte Bildaufnahmevorrichtung (1) zum Aufnehmen eines Bereichsbildes vor dem fahrenden Fahrzeug (11);
   Mittel (3) zum Bestimmen eines zulässigen Fahrbereiches (RA) in X-Y-Koordinaten mit einer der Fahrzeugfahrrichtung entsprechenden Y-Achse durch Verarbeiten eines durch die Bildaufnahmevorrichtung aufgenommenen Bildes;
   Mittel (4) zum Festsetzen eines Zielkurses (OC) in dem derart bestimmten zulässigen Fahrbereich (RA);
   Mittel (6, 7, 8) zum Erfassen des momentanen Fahrzustands (v, $\gamma$, $\delta$) des Fahrzeugs;
   Mittel (5) zum Bestimmen - auf der Basis des momentanen Fahrzustands (v, $\gamma$, $\delta$) - eines Lenkwerts ($\delta'$), um zu ermöglichen, daß das Fahrzeug (11) dem Zielkurs (OC) folgt; und
   Mittel (9, 10) zum Lenken des Fahrzeugs (11) bezüglich des Lenkwerts ($\delta'$),

   dadurch gekennzeichnet, daß Mittel (5) zum Bestimmen eines Seitenschlupfwinkels ($\beta$) des Fahrzeugs und Mittel (2; 3; 4) zum Drehen - auf der Grundlage des erfaßten Seitenschlupfwinkels ($\beta$) - des Bereichsbildes (BA), des zulässigen Fahrbereiches (RA) oder des Zielkurses (OC) derart, daß eine tatsächliche Fahrrichtung ($\vartheta$) der Y-Achse entspricht, vorgesehen sind.

2. Automatische Fahrvorrichtung nach Anspruch 1,
   dadurch gekennzeichnet, daß die Mittel (2) zum Drehen des durch die Bildaufnahmevorrichtung (1) aufgenommenen Bildes (BA) zum Bestimmen des zulässigen Fahrbereiches (RA) bezüglich des dem Drehvorgang ausgesetzten Bildes (BA) vorgesehen sind.

3. Automatische Fahrvorrichtung nach Anspruch 1,
dadurch gekennzeichnet, daß die Mittel (3) zum Drehen des bestimmten zulässigen Fahrbereiches (RA) zum Festsetzen des Zielkurses (OC) in dem dem Drehvorgang ausgesetzten zulässigen Fahrbereich (RA) vorgesehen sind.

4. Automatische Fahrvorrichtung nach Anspruch 1,
dadurch gekennzeichnet, daß die Mittel (4) zum Drehen des Zielkurses (OC) zum Bestimmen des Lenkmomentes (δ') bezüglich des dem Drehvorgang ausgesetzten Zielkurses (OC) vorgesehen sind.

5. Automatische Fahrvorrichtung nach einem der vorhergehenden Ansprüche, bei der der momentane Fahrzustand des Fahrzeugs (11) durch die Fahrgeschwindigkeit (v), die Gierrate (γ) und den Reifenlenkwinkel (δ) bestimmt ist.


**Revendications**

1. Dispositif de commande automatique de trajectoire comprenant:

   un dispositif de prise de vues (1) monté sur un véhicule (11) pour prendre une image de la zone située à l'avant du véhicule (11) en déplacement;
   des moyens (3) pour déterminer une zone de parcours admissible (RA) dans un référentiel X-Y ayant un axe Y correspondant à la direction de déplacement du véhicule, par traitement d'une image prise par le dispositif de prise de vues;
   des moyens (4) pour fixer une trajectoire cible (OC) dans la zone de parcours admissible (RA) ainsi déterminée;
   des moyens (6, 7, 8) pour détecter les conditions de déplacement instantanées (v, γ, δ) du véhicule;
   des moyens (5) pour estimer, sur la base des conditions de déplacement instantanées (v, γ, δ), une valeur de direction (δ') pour permettre au véhicule (11) de suivre la trajectoire cible (OC); et
   des moyens (9, 10) pour diriger le véhicule (11) en fonction de la valeur de direction (δ')
   caractérisé en ce que sont prévus des moyens (5) pour déterminer un angle de dérapage latéral (β) du véhicule et des moyens (2; 3; 4) pour soumettre à une rotation l'image d'une zone (BA), la zone de parcours admissible (RA) ou la trajectoire cible (OC) sur la base de l'angle de dérapage latéral détecté (β), de façon à faire correspondre une direction de déplacement réelle (θ) à l'axe Y.

2. Dispositif de commande automatique de trajectoire selon la revendication 1, caractérisé en ce que les moyens (2) pour soumettre à une rotation l'image (BA) prise par le dispositif de vues (1), sont conçus pour la détermination de la zone de parcours admissible (RA) par rapport à l'image (BA) soumise au traitement de rotation.

3. Dispositif de commande automatique de trajectoire selon la revendication 1, caractérisé en ce que les moyens (3) pour soumettre à une rotation la zone de parcours admissible (RA) déterminée, sont conçus pour fixer la trajectoire cible (OC) dans la zone de parcours admissible (RA) soumise au traitement de rotation.

4. Dispositif de commande automatique de trajectoire selon la revendication 1, caractérisé en ce que les moyens (4) pour soumettre à une rotation la trajectoire cible (OC) sont conçus pour déterminer la valeur de direction (δ') par rapport à la trajectoire cible (OC) soumise au traitement de rotation.

5. Dispositif de commande automatique de trajectoire selon l'une des revendications précédentes, dans lequel les conditions de déplacement instantanées du véhicule (11) déterminées, sont la vitesse de déplacement (v), la vitesse de lacet (γ) et l'angle de direction des pneus (δ).

# FIG.1

Image Pick-up Device `1`

→ Image Processor `2`

→ Permissible Travelling Area Determining Means `3`

→ Target Course Setting Means `4`

→ Control Means `5`

Vehicle Running Speed Sensor `6` — $v$

Yaw Rate Sensor `7` — $T$

Steering Angle Sensor `8` — $\delta$

→ Steering Control `9`

→ Steering Drive `10`

# FIG.3

# FIG.2

# FIG.4

# FIG.5(a)    FIG.5(b)

# FIG.6

# FIG.7

# FIG.8

# FIG.9

# FIG.10(a)

# FIG.10(b)

# FIG.11(a)

# FIG.11(b)

# FIG.12

# FIG. 13

```
┌─────────────────────┐
│   Reading road edge │
│   data extracted by │
│   image processing  │
└─────────────────────┘
          │
          ▼
┌─────────────────────┐
│   Reading a current │
│   steering angle    │
└─────────────────────┘
          │
          ▼
┌─────────────────────┐
│   Reading a current │
│   running speed     │
└─────────────────────┘
          │
          ▼
┌─────────────────────┐
│  Measuring a side slip │
│  angle according to the│
│  current steering angle│
│   and running speed    │
└─────────────────────┘
          │
          ▼
┌─────────────────────┐
│ Rotation of the road edge │
│ image according to the    │
│ side slip angle measured  │
└─────────────────────┘
          │
          ▼
┌─────────────────────┐
│ Setting a target course on │
│ the road according to the  │
│ rotated road edge data     │
└─────────────────────┘
          │
          ▼
┌─────────────────────┐
│ Setting a target point │
└─────────────────────┘
          │
          ▼
┌─────────────────────┐
│  Calculating a target │
│   steering angle      │
└─────────────────────┘
          │
          ▼
┌─────────────────────┐
│   Steering control  │
└─────────────────────┘
```